# EUROPEAN PATENT SPECIFICATION

(11) **EP 2 019 211 B1**
(45) Date of publication and mention of the grant of the patent: **04.09.2013**
(21) Application number: 08160970.3
(22) Date of filing: 23.07.2008
(51) Int. Cl.: F16B 2/20

(54) **Clamping device**
Klemmvorrichtung
Dispositif de serrage

(30) Priority: 24.07.2007 NL 2000775
(43) Date of publication of application: 28.01.2009
(73) Proprietor: Blok's Draadvorm Fabriek B.V., 2544 EH 's-Gravenhage (NL)
(72) Inventor: Blok, Johannes Philippus, 2693 AD, 's-Gravenzande (NL)
(74) Representative: Nederlandsch Octrooibureau

(56) References cited:
- WO-A-03/059043
- FR-A- 2 712 907
- FR-A- 2 835 575
- US-A- 2 344 816
- US-A- 3 883 934
- US-A- 4 893 788
- US-A1- 2003 227 115

## Description

The present invention relates to a clamping device which can, for example, be used for attaching an object to a further object. The term further object is to be understood as referring to any object such as a support. Examples which may be mentioned include a wire, rod, plate or tube which may be round, polygonal and the like. However, the term is also understood to include a profiled edge or another part.

In many cases, large numbers of clamping devices have to be used in order to attach various kinds of objects. This is the case, for example, in horticulture where lines and other structures have to be supported at regular intervals over great distances. Other applications are the installation and assembly industry, the consumer market and industrial products. In these cases, it is important that such clamping devices, on the one hand, can readily be fitted and, on the other hand, provide sufficient clamping force. In addition, it is important that such clamping devices can be produced relatively inexpensively and can be disposed of in future without having any adverse impact on the environment.

In addition, the clamping device has to be able to allow for any irregularities of the wire or rod without problem.

US-A-3,883,934 discloses a clamping device comprising a first post engagement part and a second post engagement part. Each engagement part is formed by one or more turns which accommodate the post between them.

FR 2,835,575 discloses a clamping device in which a wall is placed on a panel. This panel is engaged by two parts which have been bent at right angles.

US 2003/0227115 discloses a clamping device having two further object engagement parts, wherein each part comprises a loop shaped wire having a smaller loop at the centre thereof.

US 2 344 816 discloses a clamping device having two loop shaped further object engagement parts, wherein each loop is wound like a spiral. FR 2 712 907 discloses a clamping device having two spaced further object engagement parts each provided with an eyelet in which a rod is received.

US 4 893 788 discloses a similar method for clamping as disclosed in FR 2 712 907.

It is an object to provide a clamping device to which the above applies.

This object is achieved with the clamping device as described above having the features of claim 1.

According to the present invention, it becomes possible to produce the clamping device in an inexpensive manner by manufacturing it from a single wire part. Due to the resilient nature, small variations in the dimensions of the wire, rod or other support can be allowed for in a simple manner. Any desired object can be attached to the clamping device at any desired location in any desired manner. According to the present invention, the engagement members are arranged at a distance from one another which is greater than the thickness/width of the respective further object such as a wire, rod and the like. As a result thereof, e.g. the rod can be accommodated between these two engagement members if the plane through the engagement members is placed at right angles to the plane of a rod. This can be achieved by the user by pinching the first further object engagement part and the second engagement part together. When the engagement parts are subsequently released, they will move away from one another as a result of the resilience, and the plane through both engagement eyelets of a further object engagement part will come to lie at an angle to the further object, which angle differs from 90 degrees, as a result of which the fictitious distance between engagement eyelets with respect to the further object decreases. This movement continues until thefurther object is clamped. By fitting engagement parts on two sides and due to the fact that the clamping force acts on the further object in the opposite direction, the forces which occur will be compensated in the longitudinal direction of the further object and displacement with respect to the further object will not be possible in any direction. The clamping to the further object can be cancelled by simply moving the first further object engagement part and the second further object engagement part towards one another again. Thus, the attachment is never permanent.

The engagement members preferably comprise one or two engagement eyelets.

Such engagement eyelets may have any conceivable shape, such as triangular, hook-shaped, rectangular, elliptical, etc. According to an advantageous embodiment, these are of an approximately circular and, more particularly, comprise at least one wire turn or revolution. In particular in the case of a circular embodiment and when a wire turn is present, it is in some cases possible to achieve additional clamping of the further object, as the latter is pushed inside, due to the rounding of two opposite engagement eyelets, into the space between the rounding and the connecting part between the two eyelets.

However, it is also possible for the eyelets to be solid and to shape them in any conceivable way.

The first and second engagement part may be identical, in which case these will obviously extend at different angles in the unloaded state. It is also possible for one of the further object engagement parts to be embodied differently, for example in the shape of a hook.

The resilient connection between the first and second further object engagement parts may be realised as a function of the desired resilience, the desired length of the various components and the thickness of the wire used. This means that if a relatively stiff wire is used to produce the clamping device and the lever arm for moving the two further object engagement parts towards one another is relatively small, it is preferable if the resilient connection is designed as a turn or turns. If the lever is relatively large or the wire thickness is relatively small, a simple wire connection is sufficient.

The choice of material for the wire will depend on the intended use and includes plastic, ferrous and non-ferrous injection-moulding products.

According to a further variant of the invention, it is possible to thread the above-described rod, for example by providing it with threaded ends. It is possible to place the clamping device according to the invention on such a wire end in any desired position and subsequently, by rotation of the securing device and wire ends with respect to one another, ensure accurate positioning of these two parts with respect to one another. In addition, it is thus possible to achieve a very precise adjustment, depending on the pitch of the screw thread on the wire end.

The invention will be explained in more detail below with reference to the exemplary embodiments illustrated in the drawing, in which:
Fig. 1 shows a first embodiment of the clamping device according to the invention in the inoperative position;
Fig. 2 shows the clamping device according to Fig. 1 in the pinched position;
Fig. 3 shows the clamping device according to Figs. 1 and 2 arranged on a rod;
Fig. 4 shows a second variant of the clamping device according to the invention;
Fig. 5 shows a variant of the clamping device from Fig. 3, and
Fig. 6 shows clamping device outside the scope of the protection defined by the claims.

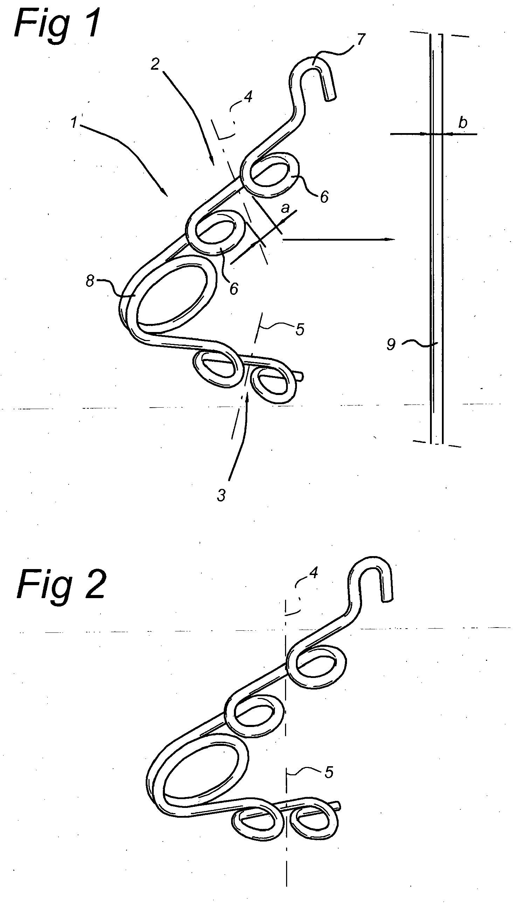

In Fig. 1, a clamping device according to the present invention is denoted overall by reference numeral 1. It is embodied for clamping engagement with a rod 9. The clamping device 1 comprises a first further object engagement part 2 and a second further object engagement part 3. Each further object engagement part comprises two adjacent, approximately circular engagement eyelets 6. The engagement eyelets 6 are a distance apart and the axis extending in between is denoted by reference numerals 4 and 5, respectively. A resilient connection 8 is provided between the first and second engagement part 2, 3. With the present invention, this resilient connection 8 is formed by a turn. A securing hook is denoted by reference numeral 7. It will be understood that the latter can be arranged in any desired location and serves for attaching any kind of object thereto.

At the location where it is clamped, the wire or rod 9 has a width b. Width b is smaller than distance a.

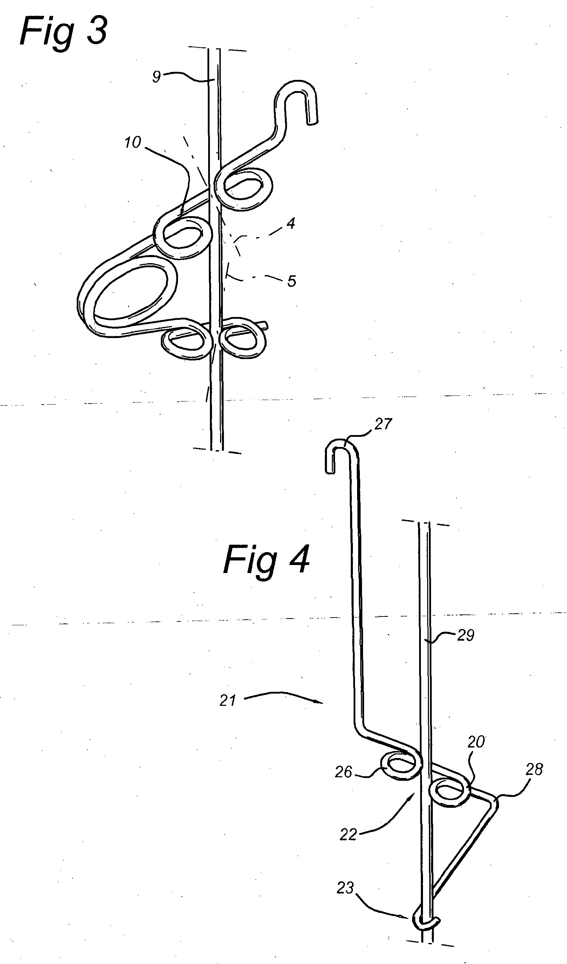

Fig. 2 shows the state of the clamping device 1 when it is pinched by a human hand. The latter is preferably pinched until the lines 4 and 5 are in line with one another. In this case, any object having a width smaller than a, such as having a width b, can be accommodated. This is the case in Fig. 3, which shows the situation after the first and second further object engagement parts have been released. Due to the resilient connection 8, these will then rebound until the "fictitious" distance between two engagement eyelets 6 which belong together corresponds to distance b. In this state, the lines 4 and 5 extend at an angle which differs from the angle in the inoperative position as illustrated in Fig. 1, so that there is sufficient tolerance in the clamping device to allow for dimensional inaccuracies and subsequent alterations.

By clamping the first further object engagement part 2 and second further object engagement part 3 in opposite directions, no displacement along the rod 9 is possible in any direction. If the object to be clamped has relatively small dimensions with respect to the radius of curvature of the engagement eyelets 6, the object is pressed down further into the spaces 10 when it is clamped in (Fig. 3). In this case, the object is not only clamped in, but also locked in, in the plane at right angles to the plane of the drawing in Fig. 1. This locking action means that the first and second further object engagement parts have to be moved towards one another over a small distance in order to enable the wire or rod or the like to be released. In this case, removal by sliding is not possible.

Fig. 4 shows a second embodiment of the present invention which is denoted overall by reference numeral 21. It also comprises first and second further object engagement parts 22, 23. The first further object engagement part comprises two eyelets, while the second further object engagement part 23 comprises a hook. The resilient connecting part 28 in this embodiment is slightly longer/less stiff than in the first embodiment, so that it is no longer necessary to provide an additional complete wire turn. Reference numeral 27 denotes a suspension hook. This structure also produces a clamping force in two directions, as a result of which sliding along the rod or wire 29 is effectively prevented.

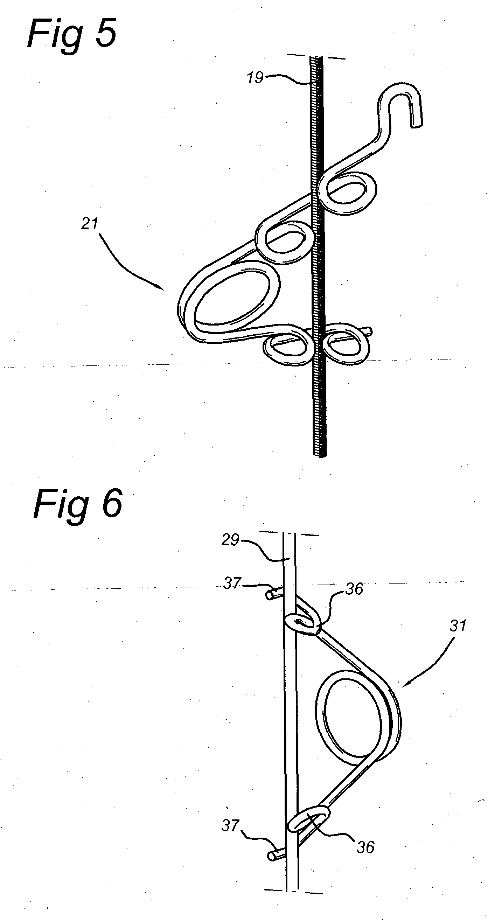

Fig. 5 shows a further variant of the invention. The rod is denoted by reference numeral 19 and comprises a wire end. The clamping device is embodied in accordance with the embodiment from Figs. 1-3 and is denoted overall by reference numeral 21.

With this variant, the clamping device 21 can be positioned on rod 19 at any desired position. Rotating rod 19 with respect to the clamping device 21 will result in a mutual displacement on account of rod 19 being threaded. This means that part 21 can be precisely adjusted with respect to part 19 by means of rotation with respect to one another, after a rough approximate mutual fixing has taken place by positioning.

Fig. 6 shows a clamping device outside the scope of protection defined the claims. The rod to be engaged is denoted by reference numeral 29 and in this example comprises a smooth rod. The clamping device is denoted by reference numeral 31. Unlike the above-described variants using two opposite eyelets, this variant has a single engagement eyelet 36 which interacts with the opposite other engagement member 37 which in this case is embodied as a bent hook-shaped part.

Upon reading the above, those skilled in the art will immediately be able to think of variant embodiments which, although they have not been included in the figures and description, are obvious after the above and are within the scope of the attached claims.

## Claims

1. Clamping device (1, 21) for clamping an object to a further object such as a wire comprising a first further object engagement part (2, 22) and a second further object engagement part (3, 23) which can be moved towards one another and away from one another in a resilient manner, in which the first further object engagement part comprises two engagement members (6) for accommodating said further object between said two engagement members, said engagement members being substantially situated in the same first plane, arranged at such a distance (a) in said plane that said further object (9, 29) can be accommodated in between (b), wherein said second further object engagement part (3, 23) is arranged in a second plane and said first and second planes are arranged at an acute angle (4, 5) with respect to one another, and wherein the engagement members comprise two engagement eyelets, said engagement eyelets (6) each comprising a complete wire turn.

2. Clamping device according to Claim 1, wherein said resilient connection between said first and second further object engagement parts comprises a complete wire turn (8).

3. Clamping device according to one of the preceding claims, wherein said second further object engagement part (23) comprises an engagement hook.

4. Clamping device according to claim 1 or 2, wherein said second further object engagement part (3) is embodied as said first engagement part (2).

5. Clamping device according to one of the preceding claims, wherein one of the further object engagement parts is provided with attachment means (7, 27).

6. Assembly comprising a clamping device according to one of the preceding claims and a wherein said clamping device is clamped on said further object with said further object engagement parts.

7. Assembly according to Claim 6, in which said further object comprises a wire, rod, plate or tube.

8. Assembly according to Claim 6 or 7, in which said further object comprises a threaded part (19).

## Patentansprüche

1. Klemmvorrichtung (1, 21) zum Klemmen eines Objekts an ein weiteres Objekt wie etwa einen Draht mit einem ersten weiteren Objekteingriffsteil (2, 22) und einem zweiten weiteren Objekteingriffsteil (3, 23), die elastisch aufeinander zu und voneinander weg bewegt werden können, wobei das erste weitere Objekteingriffsteil zwei Eingriffsglieder (6) zur Aufnahme des weiteren Objekts zwischen den beiden Eingriffgliedern aufweist, wobei die Eingriffsglieder im Wesentlichen in derselben ersten Ebene liegend in einem solchen Abstand (a) in dieser Ebene angeordnet sind, dass das weitere Objekt (9, 29) dazwischen (b) aufgenommen werden kann, wobei das zweite weitere Objekteingriffsteil (3, 23) in einer zweiten Ebene angeordnet ist und die ersten und zweiten Ebenen in einem spitzen Winkel (4, 5) zueinander angeordnet sind und wobei die Eingriffsglieder zwei Eingriffsösen aufweisen, wobei die Eingriffsösen (6) jeweils eine vollständige Drahtwindung umfassen.

2. Klemmvorrichtung nach Anspruch 1, wobei die elastische Verbindung zwischen den ersten und zweiten weiteren Objekteingriffsteilen eine vollständige Drahtwindung (8) umfasst.

3. Klemmvorrichtung nach einem der vorhergehenden Ansprüche, wobei das zweite weitere Objekteingriffsteil (23) einen Eingriffshaken aufweist.

4. Klemmvorrichtung nach Anspruch 1 oder 2, wobei das zweite weitere Objekteingriffsteil (3) wie das erste Eingriffsteil (2) ausgeführt ist.

5. Klemmvorrichtung nach einem der vorhergehenden Ansprüche, wobei eines der weiteren Objekteingriffsteile mit Aufhängungseinrichtungen (7, 27) versehen ist.

6. Aufbau mit einer Klemmvorrichtung nach einem der vorhergehenden Ansprüche und wobei die Klemmvorrichtung mit den weiteren Objekteingriffsteilen an dem weiteren Objekt angeklemmt ist.

7. Aufbau nach Anspruch 6, bei dem das weitere Objekt einen Draht, eine Stange, Platte oder Röhre umfasst.

8. Aufbau nach Anspruch 6 oder 7, bei dem das weitere Objekt ein Gewindeteil (19) umfasst.

## Revendications

1. Dispositif de serrage (1, 21) destiné à serrer un objet sur un autre objet tel qu'un fil, comprenant une première partie de mise en prise avec l'autre objet (2, 22) et une seconde partie de mise en prise avec l'autre objet (3, 23) qui peuvent être déplacées l'une vers l'autre et éloignées l'une de l'autre d'une manière élastique, dans laquelle la première partie de mise en prise avec l'autre objet comprend deux éléments de mise en prise (6) pour recevoir ledit autre objet entre lesdits deux éléments de mise en prise, lesdits éléments de mise en prise se situant sensiblement dans un même premier plan, agencés dans ledit plan à une distance (a) telle que ledit autre objet (9, 29) puisse être reçu entre (b), dans lequel ladite seconde partie de mise en prise avec l'autre objet (3, 23) est agencée dans un second plan et lesdits premier et second plans sont agencés selon un angle aigu (4, 5) l'un par rapport à l'autre, et dans lequel les éléments de mise en prise comprennent deux oeillets de mise en prise, lesdits oeillets de mise en prise (6) comprenant chacun un tour de fil complet.

2. Dispositif de serrage selon la revendication 1, dans lequel ladite liaison élastique entre lesdites première et seconde parties de mise en prise avec l'autre objet, comprend un tour de fil complet (8).

3. Dispositif de serrage selon l'une des revendications précédentes, dans lequel ladite seconde partie de mise en prise avec l'autre objet (23) comprend un crochet de mise en prise.

4. Dispositif de serrage selon la revendication 1 ou 2, dans lequel ladite seconde partie de mise en prise avec l'autre objet (3) est réalisée comme ladite première partie de mise en prise (2).

5. Dispositif de serrage selon l'une des revendications précédentes, dans lequel l'une des parties de mise en prise avec l'autre objet est dotée de moyens de fixation (7, 27).

6. Ensemble comprenant un dispositif de serrage selon l'une des revendications précédentes, et dans lequel ledit dispositif de serrage est serré sur ledit autre objet avec lesdites parties de mise en prise avec l'autre objet.

7. Ensemble selon la revendication 6, dans lequel ledit autre objet comprend un fil, une tige, une plaque ou un tube.

8. Ensemble selon la revendication 6 ou 7, dans lequel ledit autre objet comprend une partie filetée (19).
